# EUROPEAN PATENT APPLICATION

(11) **EP 3 416 107 A1**
(43) Date of publication of application: **19.12.2018**
(21) Application number: 17176415.2
(22) Date of filing: 16.06.2017
(51) Int. Cl.: G06Q 10/02, G06Q 10/04, G06Q 50/14

(54) **A SYSTEM FOR CALCULATING GROUP TRAVEL LOGISITICS**

(71) Applicant: Mastercard International Incorporated, Purchase NY 10577 (US)
(72) Inventor: RODGER, Katherine, 1050 Brussels (BE); YUAN MEI NIELSEN, Charlotte, 1000 Brussels (BE); GALLEE, Mariam, 1050 Ixelles (BE); ISAC, Elisaveta, 1700 Dilbeek (BE); LE CALLONNEC, Sebastien, Greystones, Co. Wicklow (IE)
(74) Representative: Gill Jennings & Every LLP

(57) **Abstract**

A system (1) is disclosed for calculating group travel logistics. The system includes an input module (2) with which a user can submit a travel request for a group, the request including details of a plurality of individuals and information regarding the individuals' respective locations. A calculating module 6 can calculate a plurality of group travel options, wherein each group travel option includes travel information for each individual to a common destination and a plurality of parameters, including total cost of travel for the group. The calculating module 6 can then rank the travel options according to price and can output the travel options on a display 12 for the user to review. The displayed travel options are ranked with the lowest cumulative cost option listed first. A variety of other user preferences can also be used in the ranking process, including travel time and destination properties.

## Description

The present invention relates to a system for calculating group travel logistics. In particular, it relates to a system for assisting users in determining an optimum destination and price for the group, that potentially have different points of origin, to physically meet..

Arranging travel for a group is a notoriously difficult activity, which expands in complexity with the size of the group. Each individual in the group may have their own preferences for travel, and their own sense of a fair price; these preferences and opinions may be in conflict with others in the group.

A particular difficulty arises when the individuals in the group are in different locations and will have different points of origin. It is challenging to determine an appropriate place to physically meet, and to determine a location that optimises travel arrangements and meets the price expectations for the various participants travelling together in the group. Such arrangements often involve significant volumes of telephonic and/or data traffic, for example instant messaging, SMS or e-mail between members of the group.

An object of the present invention is to overcome and mitigate these problems.

According to an aspect of the invention there is provided a system for calculating group travel logisitics, the system comprising: an input module configured to receive a travel request for a group, the request including details of a plurality of individuals and information regarding the individuals' respective locations; a calculating module configured to receive data from the input module and to calculate a plurality of group travel options, wherein each group travel option includes travel information for each individual to a common destination and a plurality of parameters; a sorting module configured to sort the plurality of group travel options according to at least one of the plurality of parameters; and a display module configured to display at least one of the sorted group travel options.

In this way, the system can determine a number of travel options for the group that can allow the individuals to physically meet in a common destination. The choice of common destination can be optimised according to one of the parameters in order to provide the ideal travel plan for the group, according to its specific circumstances. Advantageously, this can provide easy planning for group travel arrangements towards a mutually convenient destination.

Preferably the individuals' respective locations are their projected locations at the indicated time of travel. The projected locations may or may not be the same as the actual locations of the individuals at the time of operation, or the location of their residence. The projected locations may be based on the normal locations of the users, with an over-ride feature if users anticipate that their location will be different at the time of travel.

Preferably the sorting module is configured to rank the group travel options according to the at least one of the plurality of parameters, and the display module is configured to display a plurality sorted group travel options based on the ranking. Thus, a user can be encouraged to select one of the most highly ranked group travel options, since these have been determined to be best, based on the needs of the group. In another arrangement the sorting module may be configured to filter travel options that do not meet predefined criteria.

At least one of the plurality of parameters used in the sorting module may be related to the cost of travel. In this way, the system can filter the travel options to include only the cheapest or within a price range defined by the user. The sorting module may output a predetermined number of options, such as ten, that offer the lowest cost for the group. The sorting module may sort travel options based on the total travel cost for the group or some measure of average travel cost such as the mean travel cost or the median travel cost. These parameters may be used for ranking the travel options, in embodiments.

At least one of the plurality of parameters used in the sorting module is related to travel time. In this way the system can determine a common destination for the group that minimises some measure of travel time for the group, such as total travel time or a measure of average travel time, including the mean or median.

At least one of the plurality of parameters used in the sorting module may be a score. The score may be based on some weighted value of trip cost and trip travel time, and may include a number of other factors, as may be appropriate to the circumstances.

The travel request for the group received at the input module may include at least one user preference. The at least one user preference may include a feature of the desired destination such as "city break", "beach break" or "ski trip", which may be used by the sorting module to exclude destinations that do not match these criteria.

The at least one user preference may include pricing criteria such as maximum price or maximum average price per traveller.

The at least one user preference may include dates of travelling. The user may be able to indicate a preferred level of flexibility for their given dates.

The at least one user preference may include information regarding travel restrictions. For example, the user preference may be to avoid any countries, based on the nationalities of individuals in the group, that require visas or involve other travel restrictions.

The at least one user preference may include a preferred means of travel. For example, the users may be able to express their preferred means of transport (for example, trains, boat, taxi etc) and/or a preference to avoid air travel, where possible, or to only use direct flights or flights on a particular airline.

The system may comprise a weather module configured to determine the likely weather at the common destination of each group travel option, and to provide these data to the sorting module. In this way the sorting module may be able to exclude travel options that do not fulfil the criteria specified in the user preferences. For example, if the user has indicated a preference for a "beach break", and the weather module indicates that the weather in a particular destination is likely to be poor, then the relevant option may be excluded by the sorting module. Conversely, a particular destination may be included as a beach break, even if it does not normally have that reputation, if the weather is determined as likely to be good. The importance of the weather may depend on the category of group trip that is undertaken. For example, weather may have increased importance for a social trip and decreased importance for a business trip where participants are more likely to spend their time indoors.

The sorted group travel options may be displayed in a contracted form and an extended form. Each group travel option is preferably displayed initially in a contracted form, together with other travel options. Thus, the user can be presented with basic details for a number of options. Each travel option can preferably be selected for display in an extended form so that further information becomes visible. It has been found that this technique provides efficient use of "real-estate" on a display screen, which may be particularly important for use with mobiles and tablets where efficient use of screen space is particularly important.

The system may include an interface for retrieving information regarding the individuals over a network. Thus, a user may initially specify only the names of the individuals in the group. Other information regarding the individuals including their respective locations and other preferences may be retrieved over the network via the interface, which may be an API (application program interface). In one example, information may be retrieved from a social networking system or other resource that stores data relating to the individuals.

The interface may be for retrieving information from one or more travel service providers. Thus, the calculating module may be able to calculate the group travel options, based on information from third party providers. The calculating module may also be able to use data from an internal storage system. The travel service providers may include airlines, train and boat services, and private car services including taxis.

The system may include a booking module configured to allow the user to make travel reservations. Thus, the user may be able to select their preferred travel option, and can advance to making travel bookings on behalf of the group. The user may also be able to make ancillary travel bookings, including accommodation and car rental bookings.

According to another aspect of the invention there is provided a computer-implemented method of calculating group travel logisitics, the method comprising the steps of: receiving a travel request for a group at an input module, the travel request including details of a plurality of individuals and information regarding the individuals' respective locations; calculating a plurality of group travel options, wherein each group travel option includes travel information for each individual to a common destination and a plurality of parameters; sorting the plurality of group travel options according to at least one of the plurality of parameters; and displaying at least one of the sorted group travel options.

Method features may be provided as apparatus features and *vice-versa.*

According to another aspect of the invention there is provided a computer readable storage medium comprising computer executable code which when executed by a computer causes the computer to perform steps that include: receiving a travel request for a group at an input module, the travel request including details of a plurality of individuals and information regarding the individuals' respective locations; calculating a plurality of group travel options, wherein each group travel option includes travel information for each individual to a common destination and a plurality of parameters; sorting the plurality of group travel options according to at least one of the plurality of parameters; and displaying at least one of the sorted group travel options.

Embodiments of the invention are now described, by way of example, with reference to the drawings, in which:

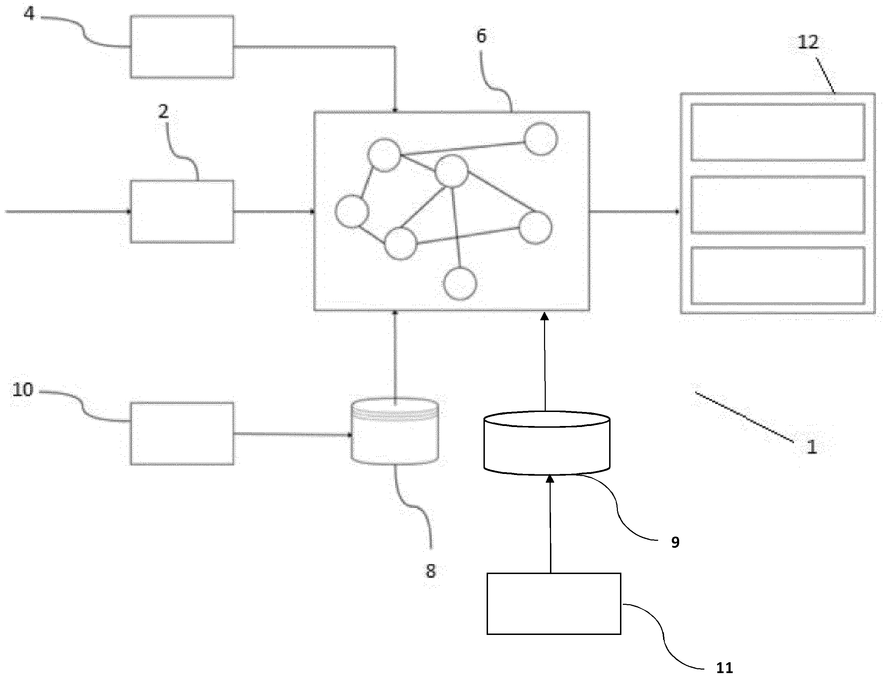

Figure 1 is a a schematic view of a system for calculating travel logistics in an embodiment of the invention; and
Figure 2 is a flow diagram showing steps that can be undertaken by different entities in an embodiment of the present invention.

A system 1 is provided for calculating travel logistics. The system 1 includes an input module 2 configured to receive a travel request for a group over a network. The input module 2 is connected to a calculating module 6 which is configured to receive data from the input module 2 and to calculate a plurality of group travel options. The calculating module 6 is connected to a database 8, which stores data about individuals. The database 8 is connected to an interface 10 that can retrieve information about individuals over a network. The calculating module 6 is also connected to a travel database 9 that can store travel information. The travel database 9 is connected to a travel interface 11 that can retrieve travel information from travel vendors, agencies and travel data providers over the network. The calculating module 6 is also connected to a weather data collector 4 that can retrieve weather data over the network. The calculating module 6 is further connected to a display 12 for providing an output for visual display by the user. Each of the various modules can include one or more processors, as would be familiar to a person skilled in the art.

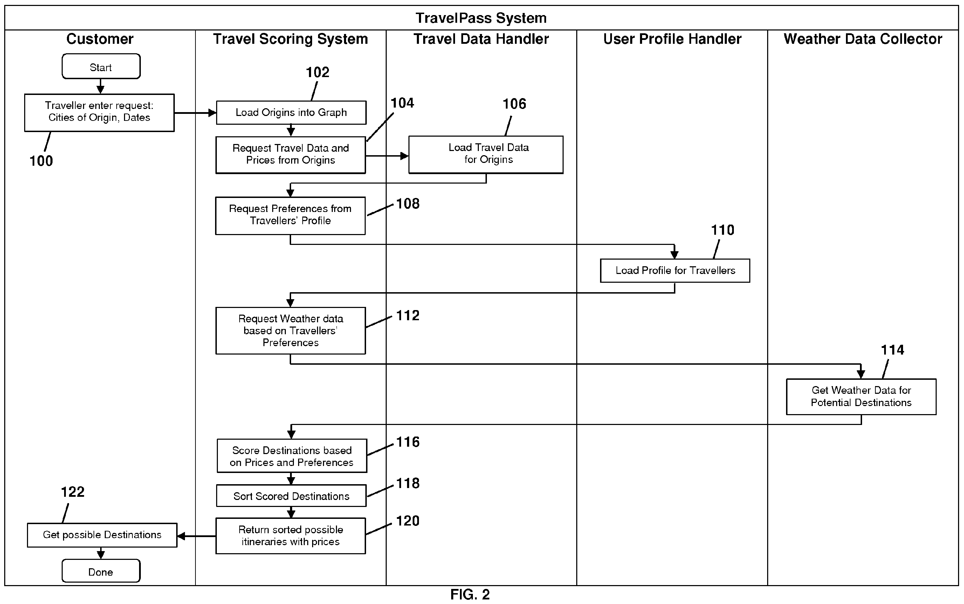

Figure 2 is a flow diagram outlining a preferred method for using the system 1. At step 100 a customer initiates the process by submitting a group travel request. The user typically operates user equipment (UE), which may be a desktop computer, laptop or mobile device. The request is typically transmitted over the internet before receipt at the input module 2. The group travel request includes the names of the individuals in the group, the preferred dates of travel, the individuals' respective locations and the individuals' nationalities. In some arrangements it is only necessary for the user to indicate the names of the individuals in the group and preferred dates of travel. In these arrangements the system 1 can retrieve other information regarding the individuals from another source, such as the database 8 or the interface 10.

At step 102 the calculating module 6 loads all individuals' points of origin into a graph. At step 104 the calculating module 6 requests travel data and prices from each point of origin to a plurality of possible destinations. This is achieved by retrieving relevant information from the travel database 9 or over the internet, via the travel interface 11. Travel information from all of the relevant points of origin is then loaded at step 106.

At step 108 the calculating module 6 requests user preferences from individuals' profiles, as stored in the database 8. Alternatively, and/or in addition, individuals may be asked to input their preferences or individuals' preferences may be acquired via the interface 10 from another source. For example, individuals' preferences may be determined from a social media account. Preferences may include travel preferences such as preferred mode of travel, seating preferences, preferences regarding direct or connecting flights, and travel provider. A user may also be able to indicate preferences regarding the destination, including a "city break" destination, or a "beach break" destination, or a "cultural" destination. Further, a user may be able to indicate preferences regarding immigration to destinations, such as the absence of a requirement to obtain a visa, based on the nationalities of the individuals in the group.

At step 110 respective profiles for all relevant individuals are loaded from the database 8 or the interface 10. Figure 2 indicates that this step is performed by a user profile handler.

At step 112 the calculating module 6 requests weather data for a plurality of destinations. The weather data is obtained at step 114 using the weather data collector 4. The weather data collector 4 can indicate current weather conditions at different destinations as well as anticipated weather conditions on the date of travel. This information may be used to filter destinations that do not satisfy user requirements.

At step 116 the calculating module 6 is configured to calculate possible destinations that could be used in the group travel. The possible destinations represent a common destination to which all individuals can travel, irrespective of their point of origin. It is possible that each individual in the group could have vastly different travel arrangements.

At step 116 the calculating module 6 can also generate a score for each group travel option based on a variety of considerations. A high score is allocated for group travel options that can be completed for a low total price, or a low average price spread across all individuals. A high score is also allocated for group travel options that fulfil user requirements. For example, a high positive score can be allocated if a travel option satisfies the requirement of a "beach break" and if the weather data collector 4 indicates favourable weather conditions for the specified dates of travel. A high positive score can also be allocated for group travel options that can be completed with a low total travel time, or a low average travel time spread across the relevant individuals.

At step 118 the calculating module 6 is configured to sort the group travel options based on their scores. Ideally, the calculating module 6 is configured to rank all travel options with decreasing scores. At step 120 the calculating module 6 is configured to output the sorted or ranked group travel options to the customer on a display screen 12. The user receives ranked travel options on a display screen of their user device at step 122, with the first travel option representing the option with the highest rank (i.e. the optimum option for the group based on their collective travel preferences).

The travel options are displayed initially in a contracted form on a user's display screen, including basic information about the group travel. The basic information may include the common destination and the cost of travel. Upon selection a travel option can be expanded to show further information. The further information typically includes detailed travel information for each of the respective travellers from their relevant point of origin.

Upon decision and selection of the travel option, the user will be able to pay for the total price for the group to travel or choose to split the price and send each individual's respective travel details and cost via email, in order to share the payment across all individuals travelling. The email will provide the ability for the recipient to trigger and complete the payment for their individual trip.

In preferred arrangements the users of the system may be able to share costs incurred on the group trip and to upload media such as photographs to share with the group.

In one example of the system in operation a group may have five travellers with respective points of origin in London, Paris, Madrid, Dublin and Brussels. The organiser of the group in this example indicates that a "beach break" is the preferred destination. In this example the calculating module 6 can obtain weather data from the weather data collector 4 for a large number of possible destinations. The calculating module 6 then determines possible travel routes to the destinations for each of the respective travellers. A score is determined for each of the possible destinations according to the output from the calculating module 6. In this example, only three destinations are output in the display 12: Jersey, Nice and La Rochelle. The calculating module 6 has determined that the total price for the group to travel to these respective locations is €1500, €2000 and €2500. The travel cost for each individual may vary considerably. For example, it may be cheaper for the traveller based on Paris to travel to Nice than it is for the traveller based in Brussels. In this example the calculating module ranks the trip options based on the total cost of the trip, irrespective of any differences in price for the individual travellers. The destinations are displayed in a contracted form showing only the destination and the total trip cost. Each trip option can be selected to show more information, which would include detailed travel arrangements for each individual and the associated costs.

In another example of the system in operation a travelling group has four travellers with respective points of origin in London, Paris, Munich and Amsterdam. The organiser of the group in this example indicates that a "business meeting" is the purpose of the trip. In this example the calculating module 6 then determines possible travel routes to a number of possible destinations for each of the respective travellers. A score is determined for each of the possible destinations according to the output from the calculating module 6. In this example there are four suggested locations: Brussels, Cologne, Lille and Paris which are displayed in ranked order together with the total group travel cost. Each trip option can be selected to show more information, which would include detailed travel arrangements for each individual and the associated costs. In embodiments the trip options may be scored according to other criteria including total travel time.

## Claims

1. A system for calculating group travel logisitics, the system comprising:
an input module configured to receive a travel request for a group, the request including details of a plurality of individuals and information regarding the individuals' respective locations;
a calculating module configured to receive data from the input module and to calculate a plurality of group travel options, wherein each group travel option includes travel information for each individual to a common destination and a plurality of parameters;
a sorting module configured to sort the plurality of group travel options according to at least one of the plurality of parameters; and
a display module configured to display at least one of the sorted group travel options.

2. The system of claim 1, wherein the sorting module is a ranking module configured to rank the group travel options according to the at least one of the plurality of parameters, and wherein the display module is configured to display a plurality sorted group travel options based on the ranking.

3. The system of claim 1 or claim 2, wherein the at least one of the plurality of parameters used in the sorting module is related to the cost of travel.

4. The system of any of the preceding claims, wherein the at least one of the plurality of parameters used in the sorting module is related to travel time.

5. The system of any of the preceding claims, wherein the at least one of the plurality of parameters used in the sorting module is a score.

6. The system of any of the preceding claims, wherein the travel request for the group received at the input module includes at least one user preference.

7. The system of claim 6, further comprising a weather module configured to determine the likely weather at the common destination of each group travel option, and to provide these data to the sorting module.

8. The system of any of the preceding claims, wherein the at least one of the sorted group travel options can be displayed in a contracted form and an extended form.

9. The system of any of the preceding claims, comprising an interface for retrieving information regarding the individuals over a network.

10. The system of any of the preceding claims, comprising an interface for retrieving information from one or more travel service providers.

11. The system of any of the preceding claims, comprising a booking module configured to allow the user to make travel reservations.

12. A computer-implemented method of calculating group travel logisitics, the method comprising the steps of:
receiving a travel request for a group at an input module, the travel request including details of a plurality of individuals and information regarding the individuals' respective locations;
calculating a plurality of group travel options, wherein each group travel option includes travel information for each individual to a common destination and a plurality of parameters;
sorting the plurality of group travel options according to at least one of the plurality of parameters; and
displaying at least one of the sorted group travel options.

13. A computer readable storage medium comprising computer executable code which when executed by a computer causes the computer to perform steps that include:
receiving a travel request for a group at an input module, the travel request including details of a plurality of individuals and information regarding the individuals' respective locations;
calculating a plurality of group travel options, wherein each group travel option includes travel information for each individual to a common destination and a plurality of parameters;
sorting the plurality of group travel options according to at least one of the plurality of parameters; and
displaying at least one of the sorted group travel options.
